(19) Europäisches Patentamt
European Patent Office
Office européen des brevets

(11) EP 4 765 724 A1

(12) **EUROPEAN PATENT APPLICATION**

(43) Date of publication:
**24.06.2026 Bulletin 2026/26**

(21) Application number: **25223347.3**

(22) Date of filing: **15.12.2025**

(51) International Patent Classification (IPC):
**H04L 9/08** (2006.01)     **G06F 18/243** (2023.01)

(52) Cooperative Patent Classification (CPC):
**H04L 9/085; G06F 18/24323; H04L 2209/46**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.12.2024 US 202418986586**

(71) Applicant: **Beijing Zitiao Network Technology Co., Ltd.**
**Beijing 100190 (CN)**

(72) Inventors:
• **CHEN, Chuyuan**
  **Beijing 100028 (CN)**
• **YIN, Dong**
  **Beijing 100028 (CN)**
• **WANG, Li**
  **Beijing 100028 (CN)**
• **YAN, Qiang**
  **Beijing 100028 (CN)**

(74) Representative: **Isarpatent**
**Patent- und Rechtsanwälte PartG mbB**
**Friedrichstraße 31**
**80801 München (DE)**

(54) **FINDING SPLITS IN GRADIENT BOOSTING SYSTEMS**

(57) Methods, systems, and apparatus, including computer programs encoded on computer storage media, for finding splits in gradient boosting systems. One example method includes identifying, based on multiparty computation (MPC), a first split among possible first splits in a first layer of a decision tree. Identifying the first split comprises determining a first derivative and a second derivative for each sample in a dataset of $n$ samples and $m$ features; generating a sorting array indicating a sorting order of at least one feature; identifying the first split based on first derivatives, second derivatives and the sorting array; and generating an index vector that indicates whether each sample belongs to a first or a second sub-dataset. The method further includes identifying a second split among possible second splits in a second layer of the decision tree based on the first derivatives, the second derivatives, the sorting array, and the index vector.

400

Identify, based on secure MPC, a first split among a plurality of possible first splits in a first layer of a decision tree
**402**

Determine a first derivative and a second derivative for each sample in a dataset of $n$ samples and $m$ features, where $n$ and $m$ are positive integers
**404**

Generate a sorting array that indicates a sorting order with respect to at least one feature
**406**

Determine a score for each possible first split based on first derivatives, second derivatives and the sorting array, where a possible first split having a maximum score among scores of the plurality of possible first splits is identified as the first split
**408**

Generate an index vector that indicates whether each sample in the dataset belongs to a first sub-dataset or a second sub-dataset divided by the first split
**410**

Identify, based on the secure MPC, a second split among a plurality of possible second splits in a second layer of the decision tree
**412**

Determine a score for each possible second split based on the first derivatives, the second derivatives, the sorting array, and the index vector, where a possible second split having a maximum score among scores of the plurality of possible second splits is identified as the second split
**414**

FIG. 4

**Description**

**TECHNICAL FIELD**

This specification relates to data processing, and in particular, to gradient boosting systems for machine learning.

**BACKGROUND**

Data plays an increasingly important role in modern society, driving advancements across various sectors. Effective collaboration among data custodians can be beneficial to the value of data. On the other hand, data collaboration may be compromised by isolated data silos due to the control of data by different entities, regulatory compliance on data privacy across countries, and frequent privacy breaches, etc.

Secure multi-party computation (MPC) is a technique developed to address some of the issues in data collaborations. Secure MPC allows parties to jointly evaluate or analyze their respective private data, or jointly train a prediction model using their respective private data, without sharing the private data with others.

**SUMMARY**

This specification describes technologies for finding splits in a gradient boosting system in a secure multi-party computation (MPC) setting.

According to a first aspect, a method is provided. The method includes identifying, based on secure multi-party computation (MPC), a first split among a plurality of possible first splits in a first layer of a decision tree. Identifying the first split includes determining a first derivative and a second derivative for each sample in a dataset of n samples and m features, where n and m are positive integers; generating a sorting array that indicates a sorting order with respect to at least one feature of the dataset; determining a score for each possible first split based on first derivatives, second derivatives, and the sorting array, where a possible first split having a maximum score among scores of the plurality of possible first splits is identified as the first split; and generating an index vector that indicates whether each sample in the dataset belongs to a first sub-dataset or a second sub-dataset divided by the first split. The method further includes identifying, based on the secure MPC, a second split among a plurality of possible second splits in a second layer of the decision tree. Identifying the second split includes determining a score for each possible second split based on the first derivatives, the second derivatives, the sorting array, and the index vector, where a possible second split having a maximum score among scores of the plurality of possible second splits is identified as the second split.

With reference to the first aspect, in some implementations, identifying the second split includes, for each sample in the first sub-dataset: multiplying the first derivative corresponding to the sample with a corresponding bit in the index vector to generate a first product; and multiplying the second derivative corresponding to the sample with the corresponding bit in the index vector to generate a second product.

With reference to the first aspect, in some implementations, identifying the second split includes determining whether a sum of the first product and the second product that correspond to a sample in the first sub-dataset is zero.

With reference to the first aspect, in some implementations, the first split is associated with a split feature and a threshold, where the split feature is one of the m features of the dataset. A sample having a value of the split feature less than the threshold belongs to the first sub-dataset, and a sample having a value of the split feature no less than the threshold belongs to the second sub-dataset.

With reference to the first aspect, in some implementations, the method further includes identifying, based on the secure MPC, a third split among a plurality of possible third splits in a third layer of the decision tree. Identifying the third split includes determining a score for each possible third split based on the first derivatives, the second derivatives, the sorting array, and an index vector generated from the second layer of the decision tree. A possible third split having a maximum score among scores of the plurality of possible third splits is identified as the third split.

With reference to the first aspect, in some implementations, the dataset includes private data owned by a first party participating in the secure MPC and private data owned by a second party participating in the secure MPC.

With reference to the first aspect, in some implementations, the decision tree is comprised in a prediction model generated based on a gradient boosting system.

With reference to the first aspect, in some implementations, the gradient boosting system is an extreme gradient boost (XGBoost) system.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

## BRIEF DESCRIPTION OF THE DRAWINGS

FIG. 1 is a diagram of an example multi-party computation (MPC) system.
FIG. 2 is an example dataset.
FIG. 3A is a diagram of an example decision tree in a gradient boosting system.
FIG. 3B illustrates an example vector including first derivatives, an example vector including second derivatives, an example index vector, and an example sorting array.
FIG. 4 is a flow diagram of an example process for generating a decision tree.
FIG. 5 is an example computing system.

Like reference numbers and designations in the various drawings indicate like elements.

## DETAILED DESCRIPTION

A gradient boosting system, for example, an extreme gradient boosting (XGBoost) system, can be used in machine learning to build a predictive model based on training data. For example, a gradient boosting system can build a predictive model in an iterative manner by generating an ensemble of decision trees sequentially, where each decision tree can be trained to minimize the errors of previously built decision trees.

A decision tree is built based on finding optimal splits in one or more layers of the decision tree. An optimal split can split a dataset into two sub-datasets at each node based on a feature and a threshold. In some cases, an optimal split at a node is identified by enumerating all possible splits (e.g., all values of all of the features in the dataset at the node) and selecting the optimal node from all possible splits (e.g., selecting the possible split with the maximum score as the optimal node). In some cases, instead of enumerating all possible splits, an optimal split at a node is selected from several approximate splits, e.g., by using approximation or histogram method, which can increase the computation speed but may lead to inaccuracy of the prediction model, especially when the training data is a large dataset.

Further, the prediction model can be jointly trained by more than one party based on secure multi-party computation (MPC), where the training data can be a dataset in the form of secret sharing that includes private data from more than one party participating in the joint training. Compared to training based on a dataset in plaintext, training based on a dataset in the form of secret sharing can take a longer time.

The present disclosure provides techniques to efficiently find splits in a gradient tree boosting system. In some implementations, each optimal split is identified by enumerating all possible splits. In some implementations, a first split in a first layer of a decision tree can be identified among a plurality of possible first splits by determining a first derivative and a second derivative for each sample in a dataset of n samples and m features; generating a sorting array that indicates a sorting order with respect to at least one feature of the dataset; determining a score for each possible first split based on first derivatives, second derivatives and the sorting array, where a possible first split having a maximum score among scores of the plurality of possible first splits is identified as the first split (e.g., as an optimal split in the first layer); and generating an index vector that indicates whether each sample in the dataset belongs to a first sub-dataset or a second sub-dataset divided by the first split. A second split in a second layer of the decision tree can be identified among a plurality of possible second splits by determining a score for each possible second split based on the first derivatives, the second derivatives, the sorting array (e.g., the sorting array generated from the first layer), and the index vector. The possible second split having a maximum score among scores of the plurality of possible second splits is identified as the second split (e.g., as an optimal split in the second layer). In some implementations, a split in a third layer or a subsequent layer can be identified based on a similar method of identifying the second split.

The described techniques can achieve one or more technical effects. In some implementations, the described techniques can improve computational efficiency and reduce or minimize the training time while maintaining accuracy, and can accelerate many applications such as privacy-preserving training of gradient boosted trees. For example, by re-using the sorting array (which is generated from the first layer) when identifying an optimal split in the second layer and/or subsequent layers, the decision tree can be built more efficiently and with better scalability, as compared to the scenario where the dataset needs to be sorted in each layer. In some implementations, the described techniques can use the sorted data saved in the root node of a tree to find optimal splits for subsequent layers of the subtrees. In some implementations, the described techniques scale only linearly with respect to the amount of data, compared to conventional techniques that scale quasi-linearly or more. As another example, by enumerating all possible splits when identifying an optimal split, the accuracy of the prediction model built based on an ensemble of decision trees can be maintained, especially when the training data is a large dataset. Additionally, the described techniques can be integrated with secure MPC to help ensure no private information in the dataset is leaked. For example, secure two-party computation protocols that perform addition, multiplication, comparison, and other necessary operations between two parties can be utilized in the training process. Features and thresholds associated with optimal splits, as well as weight of leaf nodes in the tree can be saved in the format of secure sharing to ensure that no information is leaked.

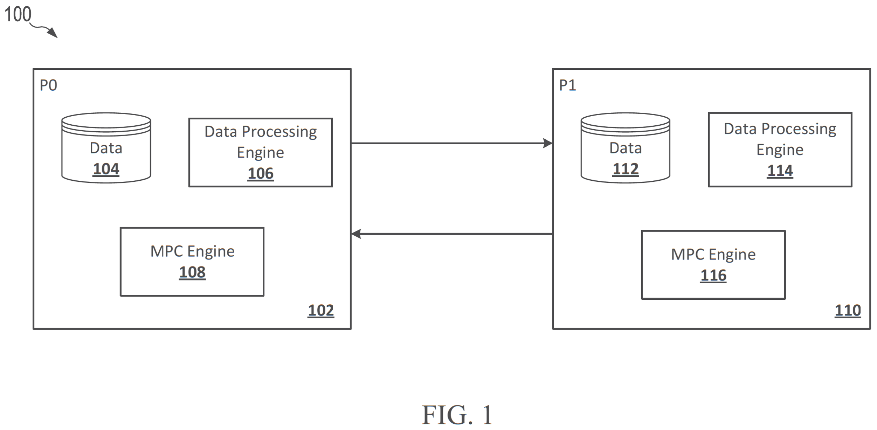

FIG. 1 is a diagram of an example secure multi-party computation (MPC) system 100. Secure MPC techniques allow parties to jointly evaluate a function with their private inputs without sharing those private inputs with the other parties. While in secure MPC, any suitable number of parties can cooperate, for simplicity the multi-party computation system 100 is illustrated with two parties: a first party 102 and a second party 110.

The parties can represent, for example, entities that seek to collaborate on data processing or data training without revealing the private data of either party. One example could be a government agency and a university. The government agency may have a lot of private data, for example, the Census Bureau can have large amounts of private data collected from a population. The university may wish to perform research that includes operations such as statistical analysis performed on a dataset of the Census Bureau. Another example could be a social media entity and a content sponsor. The social media entity may have a large dataset of information relating to social media content or users. The content sponsor may wish to perform user preference analysis or forecast based on the large dataset of information. The social media entity needs to ensure that the privacy of their dataset such that individualized information, e.g., about a particular user, cannot be obtained by other entities. Secure MPC allows the two entities to perform data processing (e.g., training prediction models based on large datasets) without providing any access to the private data outside of the respective entities.

There are several different techniques that can be used to provide the secure MPC. Typically, secret sharing is used to provide data privacy. As a simple illustrative example, assume a number of individuals working for a company wish to find their average number of countries visited without revealing their own number of countries to any other party. The private data of each participant can be a number representing their number of countries. Each participant divides their number of countries visited into shares, referred to as secret shares. The shares can be random numbers with the constraint being that the combination of some operation on the shares is equal to the private data. The operation can be, for example, an arithmetic sum or an exclusive OR. For example, using additive shares, if an individual has visited 10 countries, the secret shares can be 4 and 6, which sum to 10.

If there are four participants in the secure MPC system, each participant can divide their private data, i.e., number of countries visited, into four shares. The shares are then distributed among the parties. Thus, each party has four shares: one of their shares and one share from each other party. By themselves the shares are meaningless random numbers. Each party then combines the values of their shares and reveals that result to the other participants. Each party then has four results, which also provide the total of all the private data values, in other words, the combined private data of all the countries visited. Knowing the total number of countries visited, the parties can then compute a particular function to operate on the information, e.g., divide by four and get the average number of countries visited, without the private information for any individual party being revealed.

In a typical MPC scenario, each party jointly computes an agreed-upon function. However, each party only knows the result of the function and their own input. Thus, the first party 102 cannot learn the input of the second party 110. Secret sharing is typically used to evaluate the computation such that each party obtains a share of the output, which reveals the plaintext output when combined.

Referring to FIG. 1, the first party 102 includes data store 104, a data processing engine 106, and an MPC engine 108. Similarly, the second party 110 includes data store 112, a data processing engine 114, and an MPC engine 116. Each party can use their respective data processing engine to perform one or more functions on data from the data store. For example, the data processing engine 106 can perform one or more functions on a dataset from data store 104. The result of the function can be in the form of secret sharing shared with the second party 110. Further, each party can use their respective MPC engine to jointly perform operations such as addition, subtraction, multiplication, comparison, equality testing, etc., under cryptographic protocols shared by the parties. In some implementations, the cryptographic protocols involve message exchanges, oblivious transfers, or pre-generated correlation. The MPC engine 108 can perform operations based on secret shares of data, instead of raw inputs (e.g., plaintext) of the data, so that the parties can jointly perform an operation without revealing their private inputs.

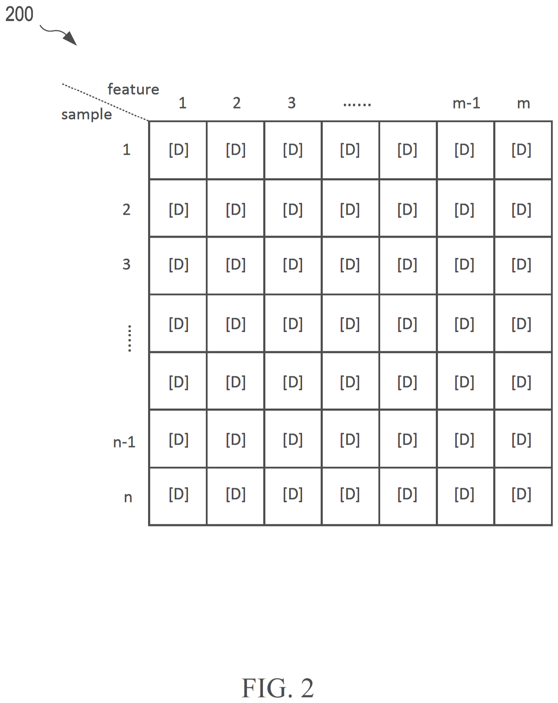

FIG. 2 illustrates an example dataset 200. The example dataset 200 includes n samples (represented by rows), where each sample includes data associated with m features (represented by columns), where n and m are positive integers. For example, the dataset 200 can include data on m features such as price, average age of buyer, and duration of being listed before sold, of n types of real estate. For another example, the dataset 200 can include data on m features such as play count, click-on count, and average view time, of advertisements promoting n kind of products placed on a social media platform.

In some implementations, the dataset 200 can be a joint dataset that includes data collected from multiple parties. For example, in a multi-party setting (e.g., a two-party setting), a part of the samples (e.g., $n_1$ samples, where $n_1 < n$) are private data owned by a first party (e.g., the first party 102 of FIG. 1), while a part of the samples (e.g., $n_2$ samples, where $n_2 < n$) are private data owned by a second party (e.g., the second party 110 of FIG. 1). For another example, in a multi-party setting, a part of the features (e.g., $m_1$ features, where $m_1 < m$) are private data owned by a first party, while a part of the features (e.g., $m_2$ features, where $m_2 < m$) are private data owned by a second party.

To ensure the private data are not revealed to any other party, the dataset 200 can include data in the form of secret sharing, where each party has a secret share of each data piece (e.g., denoted as [D] in FIG. 2) in the dataset 200, instead of having the plaintext of each data piece (e.g., denoted as D).

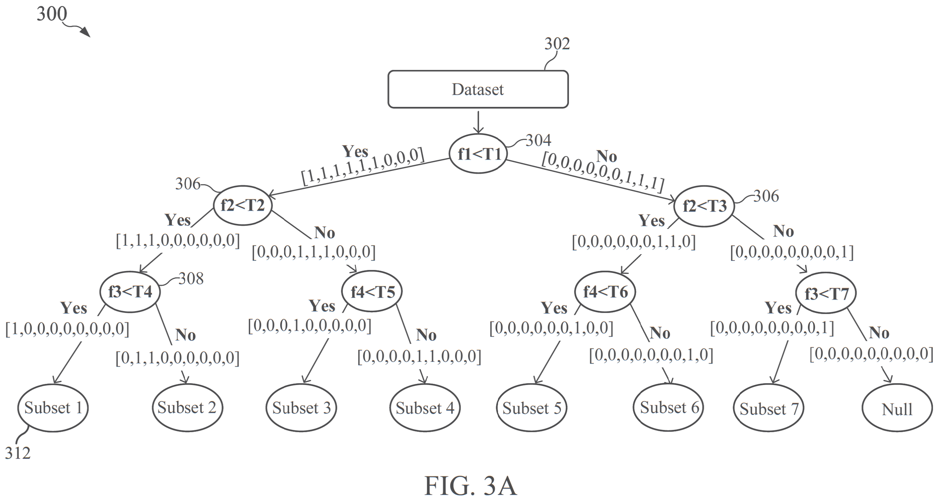

FIG. 3A is a diagram of an example decision tree 300 in a gradient boosting system. A gradient boosting system can be used in machine learning to build a predictive model based on large datasets. Predictive models can be useful in practical scenarios. For example, smart spam classifiers can protect our email by learning from massive amounts of spam data and user feedback, advertising systems can learn to match the right ads with the right context, fraud detection systems can protect banks from malicious attackers, and anomaly event detection systems can help experimental physicists to find events that lead to new physics discoveries.

A gradient boosting system can build a predictive model in an iterative manner by combining multiple weak learners, typically decision trees 300, to form a strong learner. In some implementations, the gradient boosting system works by optimizing a loss function through gradient descent, where each new decision tree is trained to minimize the errors (residuals) of the ensemble of previously built decision trees. The gradient boosting system can improve the prediction model by reducing prediction errors at each step, allowing the prediction model to capture complex patterns in the dataset. In some implementations, a gradient boosting system can be effective for tasks with structured data, as it can model complex, non-linear relationships and capture feature interactions. In some cases, traditional gradient boosting systems can be computationally intensive and prone to overfitting, especially with large datasets.

In some implementations, the gradient boosting system can be an extreme gradient boosting (XGBoost) system. Similar to traditional gradient boosting systems, an XGBoost system can build an ensemble of decision trees sequentially, where each decision tree corrects the errors of the previous ones. In addition, the XGBoost system can incorporate techniques such as regularization (to reduce overfitting), sparsity-aware learning (to handle missing or sparse data), and parallel processing (to accelerate computation). Further, the XGBoost system can use second-order gradients (e.g., Hessian) during optimization, providing more precise updates to the model parameters compared to traditional gradient boosting, which uses first-order gradients. As such, the XGBoost system can compute large datasets with better speed and scalability.

As shown in FIG. 3A, the gradient boosting system can build a decision tree 300 (e.g., a weak learner) in each iteration, so that through multiple iterations, the gradient boosting system can build an ensemble of decision trees as a stronger learner. Each decision tree 300 can be a binary tree, such that it splits the dataset at each node based on a feature and a threshold, creating two branches. The decision tree can have a predetermined depth, which is the maximum number of splits required to reach a final prediction from the root node 302 (e.g., the topmost node) to a leaf node 312 (e.g., a terminal node that contains the final prediction). As an example, the decision tree 300 has a depth of three, where three splits are required to reach the final prediction from the root node 302 to the leaf nodes 312.

It should be noted that the gradient boosting system can have any suitable number of iterations, and in each iteration, a decision tree with any suitable depth can be built. For illustration, the decision tree 300 is built in the t-th iteration of a number of iterations.

Building the decision tree 300 involves identifying an optimal split at each node to create two branches. Each split is associated with a split feature (e.g., one of the m features of the dataset) and a threshold, where a sample having a smaller value than the threshold for the split feature belongs to a first branch created by the split, and a sample having a value no smaller than the threshold for the split feature belongs to a second branch created by the split.

In some implementations, the process to identify an optimal split 304 in the first layer includes the following steps:

At step one, for a dataset (e.g., dataset 200 of FIG. 2) with n samples and m features, the gradient boosting system calculates first derivative $g_i$ and second derivative $h_i$ for each sample (e.g., the i-th sample, where $i = 1, 2, ..., n$) based on secret-sharing based MPC (such as MPC sigmoid, MPC multiplication, and MPC subtraction). In some implementations, the first derivative $g_i$ and second derivative $h_i$ can be calculated using Algorithm 1 or a variant there of, where $g_i$ is a first-order derivative of a loss function (e.g., a differentiable convex loss function) that calculates a difference between a target prediction for the i-th sample a prediction for the i-th sample from the last iteration, and $h_i$ is a second-order derivative of the loss function.

Algorithm 1:

---

**Input:** dataset $n$ samples and $m$ features at the root node 302

**for** $i = 1$ **to** $n$,

$$g_i = \partial_{\hat{y}^{(t-1)}} l(y_i, \hat{y}^{(t-1)})$$

$$h_i = \partial^2_{\hat{y}^{(t-1)}} l(y_i, \hat{y}^{(t-1)})$$

where $l(y_j, \hat{y}^{(t-1)})$ is a loss function to calculate a difference between the target prediction $y_i$ and the prediction $\hat{y}^{(t-1)}$ from the previous iteration.

**Output:** $g_i$ and $h_i$ for each sample.

At step two, the gradient boosting system enumerates all possible splits on all of the m features to determine a score (e.g., a gain) for each possible split. The split with the maximum score can be identified as the optimal split 304 for the first layer of the decision tree 300. In some implementations, the score for each possible split can be determined using Algorithm 2 or a variant thereof.

As shown in Algorithm 2, the score of a possible split is determined based on sorting the samples from small to large according to the feature associated with the possible split, and calculating a sum of $g_i$ of all samples ranked before the possible split (denoted as $G_L$), as well as a sum of $h_i$ of all samples ranked before the possible split (denoted as $H_L$).

Algorithm 2:

---

**Input:** $I$, dataset at the current node

**Input:** $d$, feature dimension

gain $\leftarrow 0$

$$G \leftarrow \sum_{i \in I} g_i, H \leftarrow \sum_{i \in I} h_i$$

**for** $k = 1$ **to** $m$ **do**

$\quad G_L \leftarrow 0, H_L \leftarrow 0$

$\quad$ **for** $j$ **in** $sorted\left(I, by\ x_{jk}\right)$ **do**

$\quad\quad G_L \leftarrow G_L + g_j;\ H_L \leftarrow H_L + h_j$

$\quad\quad G_R \leftarrow G - G_L;\ H_R \leftarrow H - H_L$

$\quad\quad score \leftarrow \max\left(score, \frac{G_L^2}{H_L+\lambda} + \frac{G_R^2}{H_R+\lambda} - \frac{G^2}{H+\lambda}\right)$

$\quad$ **end**

**end**

**Output:** a split with maximum score

At step three, by identifying the possible split with the maximum score as the optimal split 304 (e.g., associated with feature f1 and a threshold T1) in the first layer of the decision tree 300, the split 304 can divide the dataset at the root node 302 into two branches. By using MPC comparison protocols, samples whose feature f1 is less than T1 belong to the first branch (e.g., the left branch), while samples whose feature f1 is no less than T1 belong to the second branch (e.g., the right branch).

As such, the optimal split 304 in the first layer is identified, and the first layer of the decision tree 300 is built. The process can then proceed to identifying the optimal split 306 for each node in the second layer, and building the second layer of the decision tree 300.

In secure MPC, instead of sending a group of samples that belong to the first branch to a first node of the second layer and sending a group of samples that belong to the second branch to the second node of the second layer (which may lead to leakage of private data), the complete dataset at the root node 302 can be sent to the nodes of the second layer.

Further, an index vector 354 (denoted as V) can be sent to a respective node of the second layer. The index vector can include *n* bits, each bit corresponding to one of the *n* samples of the dataset at the root node 302. For example, if the i-th bit in the index vector is 1, it indicates that the i-th sample in the dataset belong to the current branch; if the i-th bit in the index vector is 0, it indicates that the i-th sample in the dataset does not belong to the current branch. For example, an index vector at the root node 302 can include all "1"s. As an example in FIG. 3A, the first node in the second layer receives $V_{left}$= [1,1,1,1,1,0,0,0], which indicates that the first to the fifth samples belong to the first branch created by the split 304; the second node in the second layer receives $V_{right}$=[0,0,0,0,0,1,1,1], which indicates that the sixth to the eighth samples belong to the second branch created by the split 304.

To identify the optimal split 306 at each node of the second layer, the gradient boosting system can use the same approach as shown in Algorithm 2, by enumerating all possible splits on all of the m features in samples that belong to the respective branch. In some implementations, when determining a score of a possible split in the second layer, the MPC can utilize the result of the sorting (e.g., the sorting array) from the first layer, instead of re-sorting the samples from small to large according to the feature associated with the possible split.

For example, during the process to identify the optimal split 304 in the first layer, the sorting sequence of the n samples with respect to each of the m features can be recorded in a sorting array 356. The sorting array 356 can have *n* rows and m columns, where each column of the sorting array 356 represents the ranking of the *n* samples from small to large with respect to a certain feature. During the process to identify the optimal split 306 at each node of the second layer, the score of each possible split can be calculated using Algorithm 2 based on the first derivatives ($g_i$), the second derivatives ($h_i$), an index vector generated from the first layer, and the sorting array 356. Further, at each node of the second layer, the gradient boosting system can multiply a vector comprising the first derivatives of the *n* samples with the index vector V, and multiply a vector comprising the second derivatives of the *n* samples with the index vector V. As such, first derivatives and second derivates corresponding to samples that do not belong to the current node can be set to 0, while first derivatives and second derivatives corresponding to samples that belong to the current node can remain unchanged.

For example, suppose the dataset at the root node 302 includes only one feature f1. Suppose that an sorted array is [-5, -3, -1, -1, -1, -1, 0, 1] in the first layer, which indicates the ranking of the eight samples with respect to the feature f1, and suppose that $V_{left}$ = [1, 0, 1, 0, 0, 1, 0, 1] is the index array received by the first node (e.g., the left node) of the second layer. As such, by multiplying the index array with the sorted array, the sorted sub-dataset at the first node of the second layer is [- 5, 0, -1, 0, 0, -1, 0, 1]. The first three zeros in the sorted sub-dataset indicate that the corresponding samples do not belong to the sub-dataset, while the last zero in the sorted dataset indicates that the corresponding sample belongs to the sub-dataset and the value of this sample is 0.

In some implementations, the gradient boosting system can determine the meaning of a zero in the sorted sub-dataset by determining whether the sum of $g_i$ and $h_i$ is equal to 0. The sum of $g_i$ and $h_i$ is not 0, unless the $g_i$ and $h_i$ are both set to 0 in the second layer when multiplied by the index vector. Therefore, if the sum of $g_i$ and $h_i$ is not 0, the zero in the sorted sub-dataset means the value of the sample 0; if the sum of $g_i$ and $h_i$ is 0, the zero in the sorted sub-dataset means the sample does not belong to the current sub-dataset.

As such, by enumerating all possible splits on all of the m features in samples that belong to the each node in the second layer, the possible split having the maximum score can be identified as the optimal split 306 of the node. For example, as shown in FIG. 3A, the optimal split 306 at the first node in the second layer is associated with feature f2 and a threshold T2, and the optimal split 306 at the second node in the third layer is associated with feature f2 and a threshold T3. The second layer of the decision tree 300 can be built based on the two optimal splits.

Splits 308 in the third layer and subsequent layers (if any) can be identified using the similar method as identifying the splits 306 in the second layer. For example, the score of each possible split can be calculated using Algorithm 2 based on the first derivatives ($g_i$), the second derivatives ($h_i$), an index vector generated from the second layer, and the sorting array 356 generated from the first layer. As an example, the first split 308 in the third layer is associated with the feature f3 and a threshold T4, the second split 308 in the third layer is associated with the feature f4 and a threshold T5, the third split 308 in the third layer is associated with the feature f4 and a threshold T6, and the fourth split 308 in the third layer is associated with the feature f3 and a threshold T7.

In the last layer of the decision tree 300, the gradient boosting system can make predictions based on sub-datasets at the leaf nodes 312, for example, by computing a weight ($w_j$) of each leaf node 312, such that:

$$w_j = -\frac{\sum_{i \in I_j} g_i}{\sum_{i \in I_j} h_i + \lambda},$$

where $I_j$ stands for the sub-dataset at a leaf node 312.

After generating the decision tree 300 in the t-th iteration, the gradient boosting system can proceed to a subsequent iteration to generate a new decision tree that reduces the errors of previous decision trees (e.g., generated in the first to the t-th iterations).

**EP 4 765 724 A1**

In some implementations, the decision tree 300 can be a full binary tree. That is, if the tree cannot find an optimal split in the current node (e.g., when the sub-dataset includes zero or only one sample), the split information from its parent node can be used in the current node to ensure accurate results. As such, all leaf nodes 312 are included in the last layer of the decision tree.

To ensure that the private data is not disclosed, directly or indirectly, to other parties participating in the model training, the training process can be implemented based on secure MPC. In some implementations, in addition to data in the dataset being in the form of secret sharing, the split in each layer, first derivatives $g_i$, second derivatives $h_i$, index vectors 354, and sorting arrays 356 can all be in the form of secret sharing.

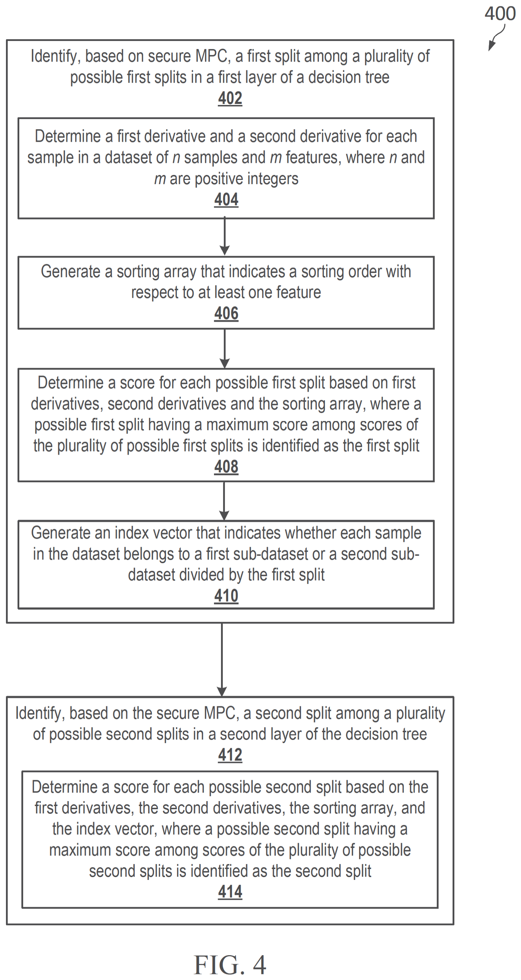

FIG. 4 is a flow diagram of an example process 400 for generating a decision tree (e.g., the decision tree 300 of FIG. 3A). The example process 400 can be implemented in a gradient boosting system (e.g., an XGBoost system) to generate a prediction model based on an ensemble of decision trees. The operations shown in process 400 may not be exhaustive and that other operations can be performed as well before, after, or in between any of the illustrated operations. Further, some of the operations may be performed simultaneously, or in a different order than shown in FIG. 4.

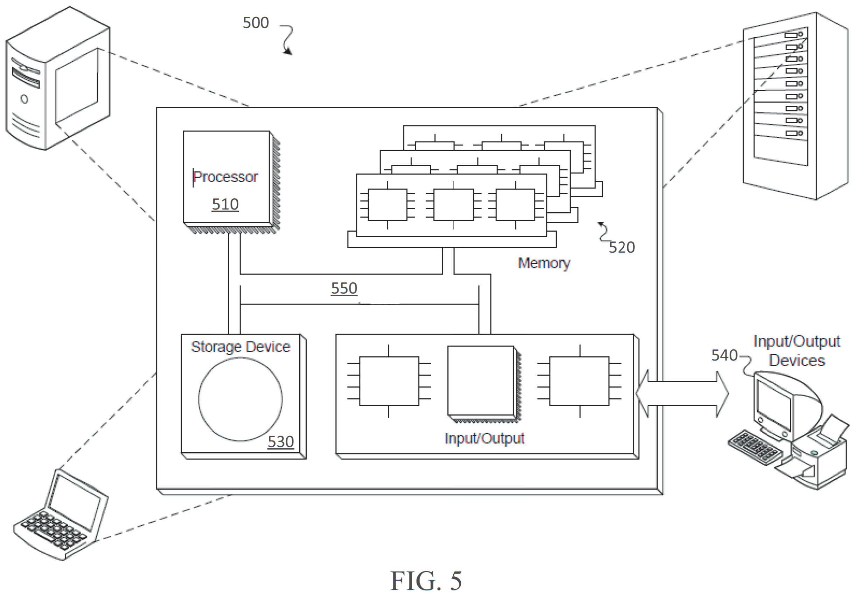

For convenience, the process 400 will be described as being performed by a system of one or more computers (e.g., a server implemented by a computer system 500 of FIG. 5), located in one or more locations, and programmed appropriately in accordance with this specification. For example, a multi-party computation system, e.g., the multi-party computation system 100 of FIG. 1, when appropriately programmed, can perform the process 400.

At 402, a first split (e.g., split 304 of FIG. 3A) in a first layer of the decision tree is identified among a plurality of possible first splits based on secure MPC (e.g., by using secure MPC protocols to perform operations such as addition, substation, multiplication, comparison, etc.). 402 includes steps 404 to 410. In some implementations, the plurality of possible first splits can be determined by enumerating all values included in all of the m features in the dataset at the root node (e.g., root node 302 of FIG. 3A) of the decision tree.

At 404, for each sample in a dataset (e.g., dataset 200 of FIG. 2) of n samples and m features, where n and m are positive integers, a first derivative (e.g., $g_i$ in Algorithm 1) and a second derivative (e.g., $h_i$ in Algorithm 1) are determined.

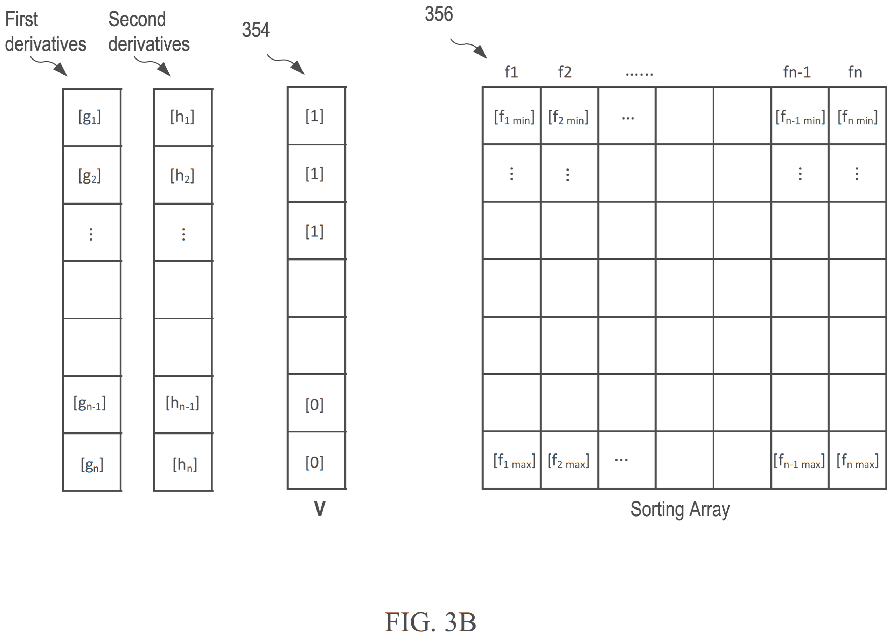

At 406, a sorting array (e.g. sorting array 356 of FIG. 3B) is generated. The sorting array indicates a sorting order with respect to at least one feature of the dataset. In some implementations, the sorting array corresponding to the dataset of n samples and m features includes n rows and m columns, where each column represents the ranking of the n samples from small to large with respect to a certain feature.

At 408, a score (e.g., score in Algorithm 2) is determined for each possible first split based on first derivatives, second derivatives, and the sorting array. The possible first split having a maximum score among scores of the plurality of possible first splits is identified as the first split (e.g., as an optimal split in the first layer).

At 410, an index vector (e.g., index vector 354 of FIG. 3B) is generated. The index vector indicates whether each sample in the dataset belongs to a first sub-dataset of a second sub-dataset divided by the first split. In some implementations, the index vector includes n bits. Each bit corresponds to one of the n samples in the dataset. For example, if the i-th bit ($i = 1, 2, ..., n$) in the index vector is 1, it indicates that the i-th sample in the dataset belongs to the first sub-dataset; if the i-th bit in the index vector is 0, it indicates that the i-th sample in the dataset belongs to other sub-datasets.

At 412, a second split (e.g., split 306 of FIG. 3A) in a second layer of the decision tree is identified among a plurality of possible second splits based on the secure MPC. 412 includes step 414. In some implementations, the plurality of possible second splits can be determined by enumerating all values included in all of the m features in the sub-dataset at the corresponding node in the second layer.

At 414, a score for each possible second split is determined based on the first derivatives, the second derivatives, the sorting array, and the index vector. The score can be determined using Algorithm 2. When determining the score of a possible second split, instead of sorting the sub-dataset at the current node with respect to a feature associated with the possible second split, the sorting array generated from the first layer at 408 can be reused, which can increase the overall calculation speed. The possible second split having a maximum score among scores of the plurality of possible second splits is identified as the second split (e.g., as an optimal split in the second layer).

FIG. 5 is an example computer system 500. The system 500 can be used for the operations described in association with the implementations described herein, for example, as a server of a party participating in a multiparty computation (MPC) instance. For example, the system 500 may be included in computing devices of the one or more online components and/or the one or more offline components. The system 500 includes a processor 510, a memory 520, a storage device 530, and an input/output device 540. The components 510, 520, 530, and 540 are interconnected using a system bus 550. The processor 510 is capable of processing instructions for execution within the system 500. In some implementations, the processor 510 is a single-threaded processor. The processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. The memory 520 can be a volatile memory unit or a non-volatile memory unit. The storage device 530 is capable of providing mass storage for the system 500. The storage device 530 is a computer-readable medium. The storage device 530 may be a floppy disk device, a hard disk device, an optical disk device, or a tape device. The input/output device 540 provides input/output operations for the system 500. The input/output device 540 includes a keyboard and/or pointing device. The input/output device 540 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A method (400), comprising:

   identifying (402), based on secure multi-party computation (MPC), a first split among a plurality of possible first splits in a first layer of a decision tree (300), wherein identifying the first split comprises:

   determining (404) a first derivative and a second derivative for each sample in a dataset (200) of $n$ samples and $m$ features, where $n$ and $m$ are positive integers;
   generating (406) a sorting array (356) that indicates a sorting order with respect to at least one feature of the dataset;
   determining (408) a score for each possible first split based on first derivatives, second derivatives, and the sorting array, wherein a possible first split having a maximum score among scores of the plurality of possible first splits is identified as the first split; and
   generating (410) an index vector (354) that indicates whether each sample in the dataset belongs to a first sub-dataset or a second sub-dataset divided by the first split; and

identifying (412), based on the secure MPC, a second split among a plurality of possible second splits in a second layer of the decision tree, wherein identifying the second split comprises:
determining (414) a score for each possible second split based on the first derivatives, the second derivatives, the sorting array, and the index vector, wherein a possible second split having a maximum score among scores of the plurality of possible second splits is identified as the second split.

2. The method of claim 1, wherein identifying the second split comprises:
for each sample in the first sub-dataset:

multiplying the first derivative corresponding to the sample with a corresponding bit in the index vector to generate a first product; and
multiplying the second derivative corresponding to the sample with the corresponding bit in the index vector to generate a second product.

3. The method of claim 2, wherein identifying the second split comprises:
determining whether a sum of the first product and the second product that correspond to a sample in the first sub-dataset is zero.

4. The method of any one of the preceding claims, wherein the first split is associated with a split feature and a threshold, wherein the split feature is one of the m features of the dataset,

wherein a sample having a value of the split feature less than the threshold belongs to the first sub-dataset, and wherein a sample having a value of the split feature no less than the threshold belongs to the second sub-dataset.

5. The method of any one of the preceding claims, further comprising:
identifying, based on the secure MPC, a third split among a plurality of possible third splits in a third layer of the decision tree, wherein identifying the third split comprises:
determining a score for each possible third split based on the first derivatives, the second derivatives, the sorting array, and an index vector generated from the second layer of the decision tree, wherein a possible third split having a maximum score among scores of the plurality of possible third splits is identified as the third split.

6. The method of any one of the preceding claims, wherein the dataset comprises private data owned by a first party (102) participating in the secure MPC and private data owned by a second party (110) participating in the secure MPC.

7. The method of any one of the preceding claims, wherein the decision tree is comprised in a prediction model generated based on a gradient boosting system.

8. The method of claim 7, wherein the gradient boosting system is an extreme gradient boost (XGBoost) system.

9. One or more computer-readable storage media storing one or more instructions that, when executable by one or more computers, cause the one or more computers to perform operations in the method of any of claims 1-8.

10. A computer-implemented system, comprising:

one or more computers; and
one or more computer memory devices interoperably coupled with the one or more computers and having computer-readable storage media storing one or more instructions that, when executed by the one or more computers, perform one or more operations in the method of any of claims 1-8.

FIG. 1

200

| feature sample | 1 | 2 | 3 | ...... | | m-1 | m |
|---|---|---|---|---|---|---|---|
| 1 | [D] | [D] | [D] | [D] | [D] | [D] | [D] |
| 2 | [D] | [D] | [D] | [D] | [D] | [D] | [D] |
| 3 | [D] | [D] | [D] | [D] | [D] | [D] | [D] |
| ⋮ | [D] | [D] | [D] | [D] | [D] | [D] | [D] |
| | [D] | [D] | [D] | [D] | [D] | [D] | [D] |
| n-1 | [D] | [D] | [D] | [D] | [D] | [D] | [D] |
| n | [D] | [D] | [D] | [D] | [D] | [D] | [D] |

FIG. 2

**FIG. 3A**

FIG. 3B

400

Identify, based on secure MPC, a first split among a plurality of possible first splits in a first layer of a decision tree
**402**

Determine a first derivative and a second derivative for each sample in a dataset of $n$ samples and $m$ features, where $n$ and $m$ are positive integers
**404**

Generate a sorting array that indicates a sorting order with respect to at least one feature
**406**

Determine a score for each possible first split based on first derivatives, second derivatives and the sorting array, where a possible first split having a maximum score among scores of the plurality of possible first splits is identified as the first split
**408**

Generate an index vector that indicates whether each sample in the dataset belongs to a first sub-dataset or a second sub-dataset divided by the first split
**410**

Identify, based on the secure MPC, a second split among a plurality of possible second splits in a second layer of the decision tree
**412**

Determine a score for each possible second split based on the first derivatives, the second derivatives, the sorting array, and the index vector, where a possible second split having a maximum score among scores of the plurality of possible second splits is identified as the second split
**414**

FIG. 4

FIG. 5

EP 4 765 724 A1

Europäisches
Patentamt

European
Patent Office

Office européen
des brevets

# EUROPEAN SEARCH REPORT

**Application Number**

EP 25 22 3347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEVIN DEFORTH ET AL: "XORBoost: Tree Boosting in the Multiparty Computation Setting", IACR INTERNATIONAL ASSOCIATION FOR CRYPTOLOGIC RESEARCH, vol. 20210406:072136, 2 April 2021 (2021-04-02), pages 1-26, XP061052653, [retrieved on 2021-04-02] * abstract * * Algorithms 3-6 * * section 4 * | 1-10 | INV. H04L9/08 G06F18/243 |
| X | FANG WENJING ET AL: "Large-scale Secure XGB for Vertical Federated Learning", PROCEEDINGS OF THE 15TH ACM WEB SCIENCE CONFERENCE 2023 ACMPUB27, NEW YORK, NY, USA, 26 October 2021 (2021-10-26), pages 443-452, XP059104536, DOI: 10.1145/3459637.3482361 ISBN: 9798400702068 * algorithm 1, Abstract, Introduction * | 1-10 | |

**TECHNICAL FIELDS SEARCHED (IPC)**

H04L
G06F

The present search report has been drawn up for all claims

| Place of search | Date of completion of the search | Examiner |
|---|---|---|
| Munich | 4 May 2026 | Yamajako-Anzala, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P4C01)